# EUROPEAN PATENT APPLICATION

(11) **EP 4 447 288 A1**
(43) Date of publication of application: **16.10.2024**
(21) Application number: 24169469.4
(22) Date of filing: 10.04.2024
(51) Int. Cl.: H02K 5/22, H01R 12/51, H02K 11/30

(54) **ACTUATOR**

(30) Priority: 14.04.2023 JP 2023066534
(71) Applicant: Sumitomo Heavy Industries, Ltd., Tokyo 141-6025 (JP)
(72) Inventor: MATSUMOTO, Yuta, Kanagawa, 237-8555, (JP); KANEISHI, Tomohiro, Kanagawa, 237-8555, (JP); MORITANI, Koji, Kanagawa, 237-8555, (JP); IWATA, Masato, Kanagawa, 237-8555, (JP)
(74) Representative: Louis Pöhlau Lohrentz

(57) **Abstract**

Provided is an actuator (10A) capable of reducing a space required for a wiring member (22). An actuator (10A) includes a hollow portion 26, and a first connection member 30A to which a first wiring member 22A to be inserted into the hollow portion 26 is connectable, in which the first wiring member 22A includes a first wiring 36A to be inserted into the hollow portion 26, and a first connected portion 38A that is provided at one end portion (26a) of the first wiring 36A and is connectable to the first connection member 30A, and the first connection member 30A is connectable to the first wiring member 22A such that the first wiring 36A extends from the first connected portion 38A obliquely with respect to an axial direction and inward in a radial direction.

## Description

### BACKGROUND OF THE INVENTION

### Field of the Invention

The present disclosure relates to an actuator.

### Description of Related Art

Japanese Unexamined Patent Publication No. 2021-97430 discloses an actuator including a hollow portion.

### SUMMARY OF THE INVENTION

The actuator may include a connection member to which a wiring member to be inserted into the hollow portion is connectable. The present inventors have recognized that there is room for improvement in the related art to reduce the space required for such a wiring member.

It is desirable to provide an actuator capable of reducing a space required for a wiring member.

An actuator according to an aspect of the present disclosure is an actuator including: a hollow portion; and a first connection member to which a first wiring member to be inserted into the hollow portion is connectable, in which the first wiring member includes a first wiring to be inserted into the hollow portion, and a first connected portion that is provided at one end portion of the first wiring and is connectable to the first connection member, and the first connection member is connectable to the first wiring member such that the first wiring extends from the first connected portion obliquely with respect to an axial direction and inward in a radial direction.

An actuator according to another aspect of the present disclosure is an actuator including: a hollow portion; a first connection member having a first connecting portion to which a first wiring member to be inserted into the hollow portion is connectable; and a changing mechanism capable of changing a direction of the first connecting portion.

According to the present disclosure, it is possible to reduce the space required for the wiring member.

### BRIEF DESCRIPTION OF THE DRAWINGS

Fig. 1 is a partial cross-sectional side view schematically showing an actuator according to Embodiment 1.
Fig. 2 is a view when a usage state of the actuator according to Embodiment 1 is viewed in the axial direction.
Fig. 3 is a wiring diagram schematically showing each wiring member according to Embodiment 1.
Fig. 4 is a schematic diagram showing each connection member according to Embodiment 1 as viewed in the axial direction.
Fig. 5 is a side sectional view schematically showing a first connection member according to Embodiment 1.
Fig. 6 is a side sectional view schematically showing a second connection member according to Embodiment 1.
Fig. 7A is a view of the radially inward first connection member according to Embodiment 2-1 as seen in the axial direction, Fig. 7B is a side sectional view of Fig. 7A, and Fig. 7C is a side sectional view of the radially outward first connection member.
Fig. 8A is a side sectional view schematically showing the radially inward first connection member according to Embodiment 2-2, and Fig. 8B is a side sectional view schematically showing the radially outward first connection member.
Fig. 9 is a side sectional view schematically showing a wire holding member according to Embodiment 3-1.
Fig. 10 is an exploded perspective view schematically showing the wire holding member according to Embodiment 3-1.
Fig. 11A is an axial sectional view schematically showing a wire holding member according to Embodiment 3-2, and Fig. 11B is an axial sectional view schematically showing a wire holding member according to Embodiment 3-3.
Fig. 12A is a side sectional view schematically showing a wire holding member according to Embodiment 3-4, and Fig. 12B is an axial sectional view thereof.
Fig. 13A is a side sectional view schematically showing a wire holding member according to Embodiment 3-5, and Fig. 13B is an axial sectional view thereof.

### DETAILED DESCRIPTION OF THE INVENTION

Hereinafter, embodiments for implementing an actuator of the present disclosure will be described. The same or equivalent elements will be denoted by the same reference numerals and the repeated description thereof will be omitted. In each drawing, for convenience of explanation, components are omitted, enlarged, or reduced as appropriate. The drawings shall be viewed according to the direction of the reference numerals.

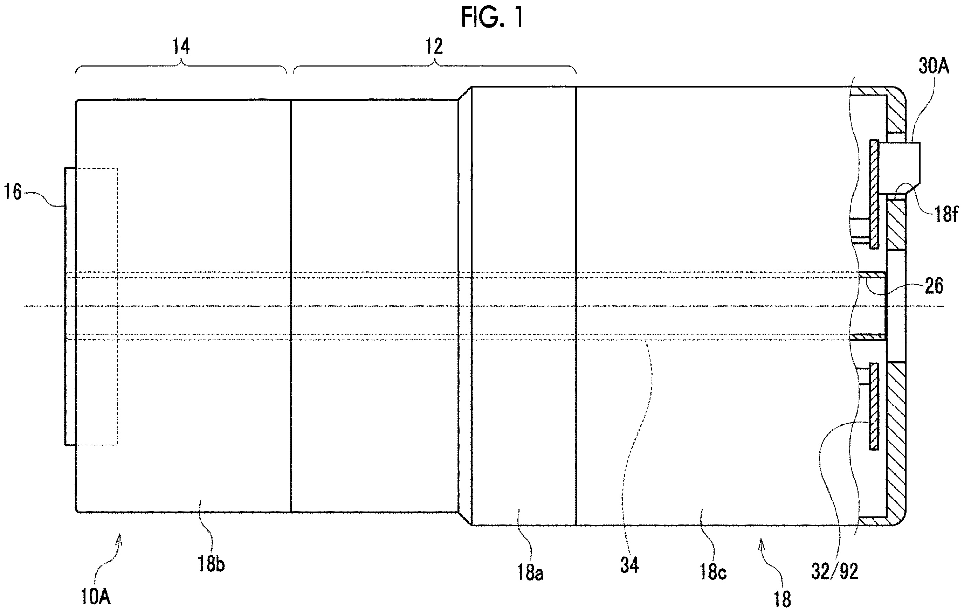

Fig. 1 will be referred to. An actuator 10A includes a driving device 12, a speed reducer 14 that reduces power output from the driving device 12, an output member 16 provided as a part of the speed reducer 14, and a housing 18 provided as a part of the driving device 12 and the speed reducer 14.

Although an electric motor will be described as an example of the driving device 12, a specific example thereof is not particularly limited and may be a gear motor, an engine, or the like. The speed reducer 14 transmits power by using a transmission element such as a gear, a traction drive, a chain, or a belt, for example. In a case where a gear device is used as the speed reducer 14, a specific example thereof is not particularly limited, and a simple planetary gear device, an eccentric oscillating gear device (center crank type, distribution type, or the like), a flexible meshing gear device (silk hat type, cup type, cylinder type, or the like), a perpendicular shaft gear device, a parallel shaft gear device, or the like may be used. The output member 16 outputs the power (here, the rotational power) transmitted from the driving device 12 via the speed reducer 14 to the outside.

The housing 18 accommodates various internal components of the actuator 10A. The internal components are, for example, a stator and a rotor of the driving device 12, a reduction mechanism of the speed reducer 14, an output member 16, or the like. The housing 18 includes a first housing member 18a that is a part of the driving device 12, a second housing member 18b that is a part of the speed reducer 14, and a cover 18c that is provided on a side opposite to the second housing member 18b with respect to the first housing member 18a. The cover 18c covers an interface substrate 92 to be described later.

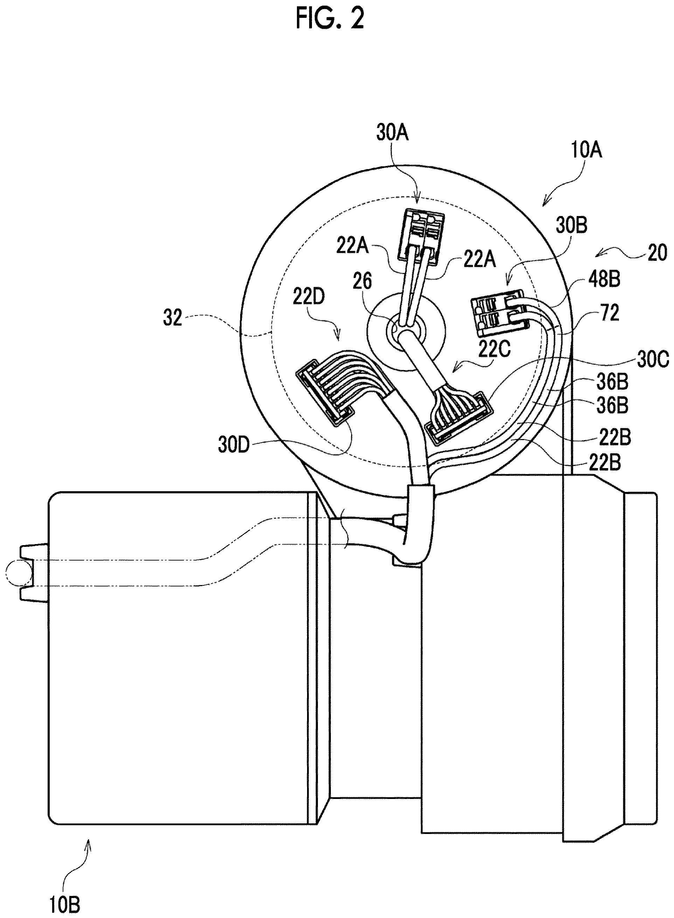

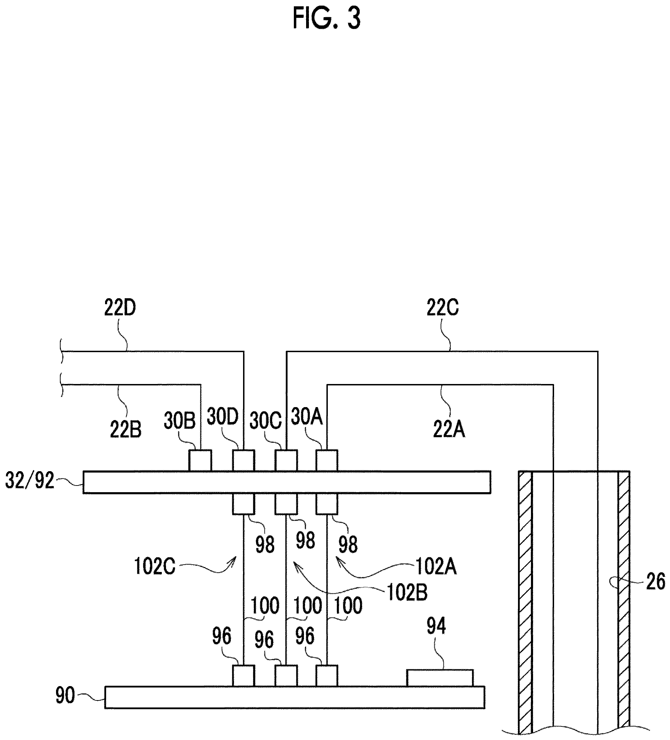

Figs. 2 and 3 will be referred to. The actuator 10A is incorporated in, for example, a joint portion of an articulated robot. Here, a first actuator 10A incorporated in a first joint portion of the articulated robot and a second actuator 10B incorporated in a second joint portion adjacent to the first joint portion in the articulated robot are shown. The actuators 10A and 10B are driven to rotate one of the adjacent robot members (arm members) connected to each other in the joint portion with respect to the other. Hereinafter, various features will be described with the first actuator 10A being focused on. Further, the usage of the actuator 10A is not limited to the articulated robot, the actuator 10A may be used for various industrial machines (machine tools, construction machines, and the like), and various machines such as transport equipment (conveyors, vehicles, and the like) in addition to various robots (industrial robots, service robots, and the like).

The actuator 10A is used in combination with at least one of the wiring members 22A to 22D provided separately from the actuator 10A. The wiring members 22A to 22D of the present embodiment include two power supply wiring members 22A and 22B that configure a power supply line, and two communication wiring members 22C and 22D that configure a communication line. The wiring members 22A to 22D are used to connect the external device outside the actuator 10A and the actuator 10A. The external device is, for example, a power supply device, an information processing device, another actuator, or the like.

The two power supply wiring members 22A and 22B include a first wiring member 22A that configures an input power supply line, and a second wiring member 22B that configures an output power supply line. Power is supplied to the first actuator 10A from the power supply device side via an input power supply line, and power is output to the second actuator 10B from the first actuator 10A via an output power supply line. A total of two first wiring members 22A of the present embodiment are provided corresponding to the positive electrode and the negative electrode. Two second wiring members 22B are also present in the same manner.

The two communication wiring members 22C and 22D include a third wiring member 22C that configures an input communication line, and a fourth wiring member 22D that configures an output communication line. Information is input to the first actuator 10A from the information processing device via the input communication line, and information is output to the second actuator 10B from the first actuator 10A via the output communication line. The information processing device is, for example, a host control device that comprehensively controls a plurality of actuators used in an articulated robot, and a control command for controlling each actuator is transmitted as information.

The first and third wiring members 22A and 22C are inserted into a hollow portion 26 (to be described later) of the actuator 10A. The second and fourth wiring members 22B and 22D are not inserted into the hollow portion 26 of the actuator 10A, and are disposed in the external space.

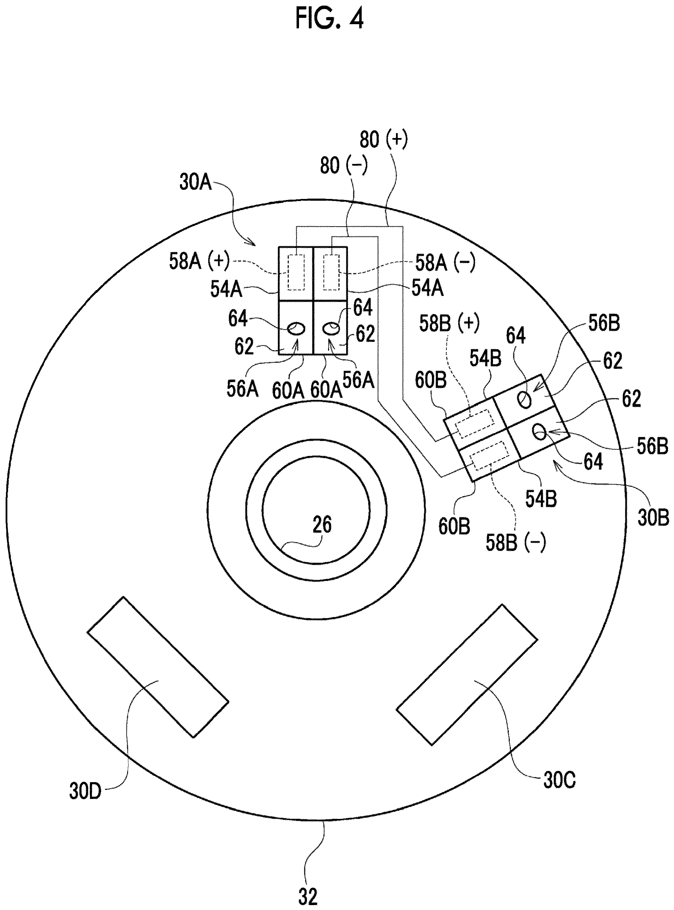

Figs. 2 and 4 will be referred to. The actuator 10A includes a hollow portion 26, connection members 30A to 30D that are connectable to the wiring members 22A to 22D, and a first fixed member 32 to which the connection members 30A to 30D are fixed.

The connection members 30A to 30D include a first connection member 30A that is connectable to the first wiring member 22A, and a second connection member 30B that is connectable to the second wiring member 22B. In addition, the connection members 30A to 30D include a third connection member 30C that is connectable to the third wiring member 22C, and a fourth connection member 30D that is connectable to the fourth wiring member 22D. The connection members 30A to 30D of the present embodiment are exposed to an external space through the opening portion 18f (refer to Fig. 1) formed in the cover 18c.

The first fixed member 32 is an interface substrate 92 to be described later. The first fixed member 32 is fixed to the housing 18 via another member. The specific example of the first fixed member 32 is not particularly limited, and may be, for example, the housing 18.

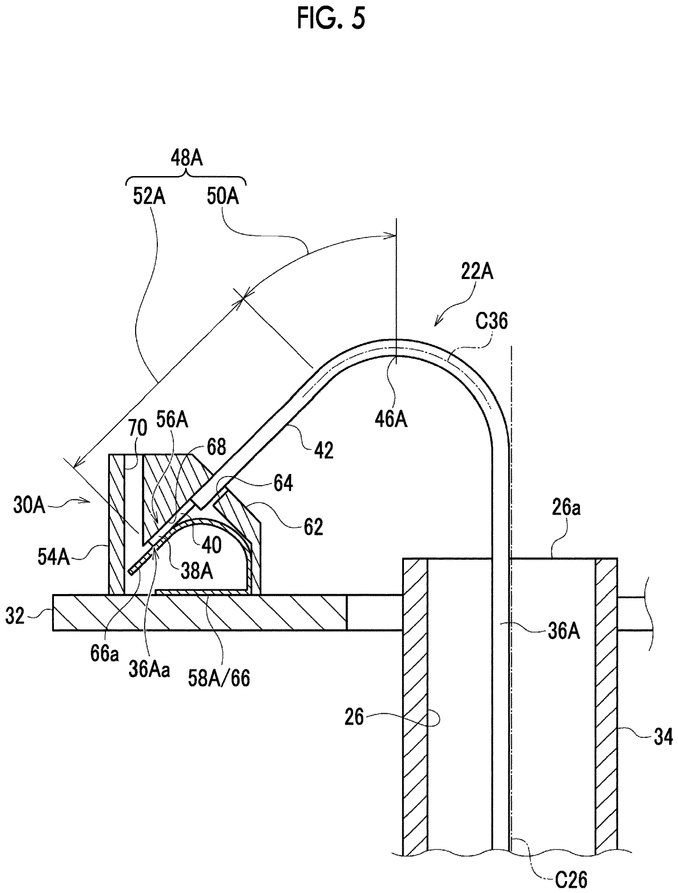

Fig. 5 will be referred to. The hollow portion 26 is provided inside a rotary shaft 34 that is integrally rotatable with the output member 16 in the present embodiment. The specific example of the hollow portion 26 is not particularly limited, and may be provided in the housing 18 or the like, for example. The hollow portion 26 is provided to extend long in one direction and penetrate. Hereinafter, a longitudinal direction of the hollow portion 26 is referred to as an axial direction, and a radial direction and a circumferential direction with the center line C26 of the hollow portion 26 as the center of the circle is simply referred to as a radial direction and a circumferential direction. Further, the first wiring member 22A is drawn from one end portion 26a on one side in the axial direction of the hollow portion 26, and the drawn point is connected to the first connection member 30A. Hereinafter, one side (upper side of the paper surface in Fig. 5) in the axial direction is referred to as the outer side in the axial direction, and a side (lower side of the paper surface in Fig. 5) opposite to the one side in the axial direction is referred to as the inner side in the axial direction.

The first wiring member 22A includes a first wiring 36A to be inserted into the hollow portion 26 of the actuator 10A, and a first connected portion 38A that is provided at one end portion 36Aa of the first wiring 36A and connectable to the first connection member 30A.

The first wiring 36A includes a conductor 40 having conductivity, and an insulating layer 42 that covers the conductor 40. The conductor 40 is formed of a single wire, a stranded wire, or the like. A folding portion that is bent in the axial direction in a portion drawn from the hollow portion 26 of the actuator 10A is provided in the first wiring 36A. The folding portion is provided with a first internal bending section 48A that is bent axially inward from a first internal bending start position 46A located at a point spaced apart axially outward with respect to the first connection member 30A and extends to the first connected portion 38A. The first internal bending start position 46A is a position where a surface perpendicular to the center line C36 of the first wiring 36A becomes parallel to the axial direction and then starts to be inclined with respect to the axial direction, toward the first connected portion 38A. The first internal bending section 48A is provided with a first bending portion 50A bent toward the first connected portion 38A and a first straight portion 52A extending straight toward the first connected portion 38A.

The first connected portion 38A of the present embodiment is configured by the end portion itself of the first wiring 36A. In order to implement this, a conductor exposed portion where the conductor 40 is exposed from the insulating layer 42 is provided at the end portion of the first wiring 36A of the present embodiment, and the conductor exposed portion configures the first connected portion 38A.

The first connection member 30A of the present embodiment is a terminal block such as a screwless type terminal block. The first connection member 30A includes a first base member 54A fixed to the first fixed member 32, a first connecting portion 56A which is provided in the first base member 54A and to which the first connected portion 38A of the first wiring member 22A is connected, and a first terminal 58A which is supported by the first base member 54A and electrically connected to the first wiring member 22A connected to the first connecting portion 56A. The first connection member 30A of the present embodiment includes two first unit components 60A with a first base member 54A, a first connecting portion 56A, and a first terminal 58A as a unit (also refer to Fig. 4). The individual first wiring members 22A are connected to the individual first unit components 60A.

An inclined surface 62 is provided in the first base member 54A of the present embodiment. The inclined surface 62 is provided on the outer surface of the first base member 54A, and is inclined radially inward and axially inward. A wire insertion hole 64 into which the first wiring member 22A is inserted is formed in the inclined surface 62. The wire insertion hole 64 extends obliquely with respect to the axial direction and radially inward toward the inlet side.

The first connecting portion 56A of the first connection member 30A that configures the terminal block includes a pressing member 66 that presses the first connected portion 38A of the first wiring member 22A, and a receiving portion 68 that receives the first connected portion 38A pressed by the pressing member 66. The pressing member 66 is formed of, for example, a plate spring member, a screw, or the like. The pressing member 66 of the present embodiment includes a pressing portion 66a that presses the first connected portion 38A toward the receiving portion 68 by a restoring force due to elastic deformation of the pressing member 66. The receiving portion 68 is configured by a part of the first base member 54A or the first terminal 58A. Here, an example is shown in which the pressing member 66 also serves as the first terminal 58A, and the pressing member 66 presses the first connected portion 38A toward a part of the first base member 54A serving as the receiving portion 68. In addition, the first terminal 58A may be a separate body from the pressing member 66, and the pressing member 66 may press the first connected portion 38A toward the first terminal 58A serving as the receiving portion 68.

The first connected portion 38A is pressed by the pressing member 66 and is connected by the first connecting portion 56A of the first connection member 30A. In this way, the first connecting portion 56A comes into contact with the first connected portion 38A of the first wiring member 22A serving as a connection partner, and thus holds the position of the first connected portion 38A. The first wiring member 22A is electrically connected to an electric component (a control unit 94 to be described later or the like) of the actuator 10A via the first terminal 58A.

A tool insertion hole 70 for inserting a tool such as a driver is formed in the first base member 54A. The pressing portion 66a of the pressing member 66 is pressed by the tool inserted into the tool insertion hole 70, so that the pressing of the first wiring member 22A by the pressing member 66 is released, and the first wiring member 22A can be separated from the first connection member 30A.

Here, the first connection member 30A is connectable to the first wiring member 22A such that the first wiring 36A extends obliquely with respect to the axial direction and radially inward from the first connected portion 38A of the first wiring member 22A. The first wiring 36A extends axially outward from the first connected portion 38A. A part of the first wiring 36A extending in this way configures the first internal bending section 48A described above. The first wiring 36A is not provided with a portion extending along the axial direction in a range from the first internal bending start position 46A of the first wiring 36A to the first connected portion 38A. In order to connect the first wiring member 22A to the first connection member 30A in this way, the first connected portion 38A which is a part of the first wiring 36A is connected to the first connection member 30A in a state of being inclined with respect to the axial direction. In addition, in a case where the first connection member 30A includes the wire insertion hole 64, when the first wiring member 22A is connected to the first connection member 30A in this way, the first wiring 36A is inserted into the wire insertion hole 64 obliquely with respect to the axial direction.

The effects of the above-described actuator 10A will be described. In general, the first wiring member 22A is connected to the first connection member 30A such that the first wiring 36A extends along the axial direction from the first connected portion 38A of the first wiring member 22A. In this case, the first wiring 36A needs to be bent by 90° in the first internal bending section 48A of the first wiring 36A. In other words, the first bending portion 50A in the first internal bending section 48A of the first wiring 36A in an angle range of 90° is required for the first wiring 36A. Therefore, the axial space required for the first internal bending section 48A of the first wiring 36A or a portion that is continuous to the other end side of the first wiring 36A is excessively increased.
(A) Here, the first connection member 30A of the present embodiment is connected to the first wiring member 22A such that the first wiring 36A extends obliquely with respect to the axial direction from the first connected portion 38A of the first wiring member 22A. Therefore, the angle range of the first bending portion 50A of the first wiring 36A required for the first internal bending section 48A of the first wiring 36A can be made smaller than 90°. Therefore, compared to a case where the first wiring 36A extends along the axial direction from the first connected portion 38A of the first wiring member 22A, the axial space required for the first internal bending section 48A of the first wiring 36A or the portion that is continuous on the other end side thereof can be reduced, which is advantageous for space saving. In this case, the axial space required for the first internal bending section 48A or the like can be reduced, by bringing the first internal bending start position 46A of the first wiring member 22A close to the first fixed member 32 by the reduction in the angle range of the first bending portion 50A.

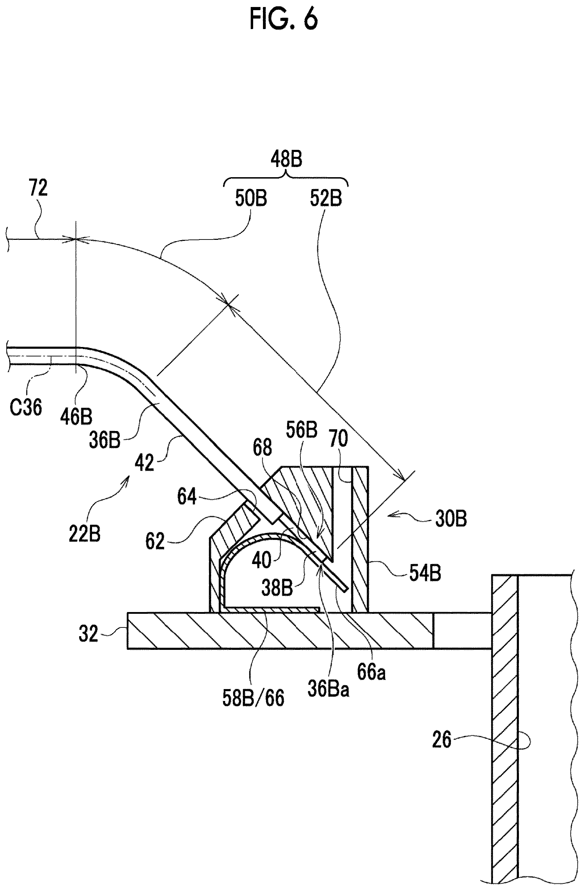

Next, a description will be given of other features of the actuator 10A according to Embodiment 1 with reference to Fig. 6. The second wiring member 22B includes a second wiring 36B, and a second connected portion 38B that is provided at one end portion 36Ba of the second wiring 36B and connected to the second connection member 30B. The second wiring 36B of the present embodiment is provided with a second internal bending section 48B that is bent axially inward from the second internal bending start position 46B located at a point deviated radially outward and axially outward with respect to the second connection member 30B and extends to the second connected portion 38B. The second internal bending section 48B is provided with a second bending portion 50B bent toward the second connected portion 38B and a second straight portion 52B extending straight toward the second connected portion 38B. The second wiring 36B of the present embodiment is provided with a parallel section 72 that extends in parallel with a surface perpendicular to the axial direction (hereinafter, referred to as an axial direction perpendicular surface) on the outer side in the axial direction of the first fixed member 32 as a section that is continuous to the other end side of the second wiring 36B with respect to the second internal bending section 48. In the example of Fig. 2, the second wiring 36B is provided to bend in the circumferential direction toward the other end side of the second wiring 36B in the second internal bending section 48B and the parallel section 72. In Fig. 6, for convenience of explanation, the second wiring 36B is shown to extend parallel to the section cut along the axial direction.

The second connection member 30B of the present embodiment is a terminal block such as a screwless type terminal block, similarly to the first connection member 30A. The second connection member 30B includes a second base member 54B, a second connecting portion 56B, and a second terminal 58B. The second connection member 30B of the present embodiment includes a plurality of second unit components 60B with the second base member 54B, the second connecting portion 56B, and the second terminal 58B as a unit (also refer to Fig. 4). The functions and components of the second wiring member 22B and the second connection member 30B are common to those of the first wiring member 22A and the first connection member 30A, except that the connection targets are changed from the first wiring member 22A and the first connection member 30A to the second wiring member 22B and the second connection member 30B. Therefore, the same components (inclined surface 62 and the like) are denoted by the same reference numerals, and the overlapping description is omitted. Here, the differences will be mainly described.

The inclined surface 62 of the second base member 54B is inclined radially outward and axially inward. The wire insertion hole 64 extends obliquely with respect to the axial direction and outward in the radial direction toward the inlet side.

The second connection member 30B is connectable to the second wiring member 22B such that the second wiring 36B extends obliquely with respect to the axial direction and outward in the radial direction from the second connected portion 38B of the second wiring member 22B. The second wiring 36B extends axially outward from the second connected portion 38B. A part of the second wiring 36B extending in this way configures the above-described second internal bending section 48B. Accordingly, in the present embodiment, similar to the first connection member 30A, the angle range of the second bending portion 50B of the second wiring 36B required for the second internal bending section 48B from the second internal bending start position 46B to the second connected portion 38B of the second wiring 36B can be made smaller than 90°. Therefore, compared to a case where the second wiring 36B extends along the axial direction from the second connected portion 38B of the second wiring member 22B, the axial space required for the second internal bending section 48B of the second wiring 36B or the portion that is continuous to the other end side thereof can be reduced, which is advantageous for space saving.

Fig. 4 will be referred to. The power supply wiring members 22A and 22B and the connection members 30A and 30B connected to the power supply wiring members 22A and 22B configure a power supply line. Each of the connection members 30A and 30B configuring the power supply line includes terminals 58A and 58B having different polarities. Specifically, the first connection member 30A includes the first terminal 58A for each of the two first unit components 60A, and includes first terminals 58A(+) and 58A(-) which are a pair having different polarities. The pair of first terminals 58A(+) and 58A(-) include a first positive electrode terminal 58A(+) and a first negative electrode terminal 58A(-) having different polarities from each other. The second wiring member 22B includes the second terminal 58B in each of the two second unit components 60B, and thus includes the second terminals 58B(+) and 58B(-) which are a pair having different polarities. The pair of second terminals 58B(+) and 58B(-) include a second positive electrode terminal 58B(+) and a second negative electrode terminal 58B(-) having different polarities from each other.

Each of the pair of first terminals 58A(+) and 58A(-) is electrically connected to the second terminal 58B(+) or 58B(-) having the same polarity, among the pair of second terminals 58B(+) and 58B(-), by the individual inter-terminal wirings 80(+) and 80(-). More specifically, the first positive electrode terminal 58A (+) is electrically connected to the second positive electrode terminal 58B (+) by the first inter-terminal wiring 80 (+), and the first negative electrode terminal 58A (-) is electrically connected to the second negative electrode terminal 58B (-) by the second inter-terminal wiring 80 (-). In addition, each of the pair of first terminals 58A and each of the pair of second terminals 58B are electrically connected to a common electric component (the control unit 94 to be described later or the like) mounted on the actuator 10A.

Accordingly, one of the pair of first terminal 58A and the pair of second terminal 58B can be used as a part of the input power supply line, and the other thereof can be used as a part of the output power supply line. For example, in a case where the pair of first terminals 58A is used as an input power supply line as in the present embodiment, power is input to the electric component (the control unit 94 or the like) from the power supply device side via the pair of first terminals 58A. In this case, power is output from the first actuator 10A to the second actuator 10B via the pair of second terminals 58B serving as an output power supply line. In this case, power is transmitted via the input power supply line (the first wiring member 22A, the first terminal 58A, and the like) → the inter-terminal wiring 80 → the output power supply line (the second wiring member 22B, the second terminal 58B, and the like). In a case where the pair of second terminals 58B is an input power supply line and the pair of first terminals 58A is an output power supply line, power is transmitted in a reverse flow. Further, in this case, power is input from the power supply device side to the electric component (the control unit 94 or the like) via the pair of second terminals 58B.

In this way, each of the pair of first terminals 58A (+) and 58A (-) is electrically connected to the second terminal having the same polarity among the pair of second terminals 58B (+) and 58B (-), and thus, one can be used as an input power supply line, and the other can be used as an output power supply line. The first connection member 30A and the second connection member 30B that contribute to the implementation of such a function are devised to reduce the axial space required for the first wiring member 22A and the second wiring member 22B as described above. Therefore, the present invention is advantageous in that the function can be implemented while saving space.

Fig. 3 will be referred to. The actuator 10A includes a driver substrate 90, and an interface substrate 92. The driver substrate 90 and the interface substrate 92 are accommodated in the housing 18 and are fixed to the housing 18 via another member (not shown).

The control unit 94 including a driver IC or the like is mounted on the driver substrate 90. The control unit 94 generates drive power by using power supplied from the power supply device, and drives the driving device 12 by using the drive power, thereby controlling the driving device 12. The driver substrate 90 may be provided with a sensor for an encoder. In this case, the sensor may detect the rotation of the driving shaft that outputs the rotational power of the driving device 12 and/or the rotation of the output member 16, and the driving device 12 may be controlled based on the detection result. In addition, the control unit 94 may control other electric components (for example, a brake mechanism or the like) mounted on the actuator 10A.

The interface substrate 92 functions as an external interface for connecting the external device and the actuator 10A. At least one of the connection members 30A to 30D for connecting the wiring members 22A to 22D is mounted on the interface substrate 92. The connection members 30A to 30D of the present embodiment include the power supply connection members 30A and 30B that configure the power supply line and the communication connection members 30C and 30D that configure the communication line. The power supply connection members 30A and 30B include the first connection member 30A to which the above-described first wiring member 22A is connected, and the second connection member 30B to which the second wiring member 22B is connected. The communication connection members 30C and 30D include the third connection member 30C to which the above-described third wiring member 22C is connected, and the fourth connection member 30D to which the fourth wiring member 22D is connected. In the present embodiment, the power supply connection members 30A and 30B are configured by a terminal block, and the communication connection members 30C and 30D are configured by a connector, but specific examples thereof are not particularly limited.

The driver substrate 90 includes a driver-side connecting portion 96, and the interface substrate 92 includes an interface-side connecting portion 98 connected to the driver-side connecting portion 96. The driver-side connecting portion 96 and the interface-side connecting portion 98 of the present embodiment are connected to each other via the relay wiring member 100. In order to implement this, the driver-side connecting portion 96 and the interface-side connecting portion 98 may be configured by, for example, a terminal (tab terminal or the like), a connector, or the like, in addition to the conductor pattern (through-hole, land, or the like) provided in each of the substrates 90 and 92. The relay wiring member 100 is connected to the driver-side connecting portion 96 and the interface-side connecting portion 98 by solder, a terminal (a crimp terminal, a pressure contact terminal, or the like), a connector, or the like. In addition, the driver-side connecting portion 96 and the interface-side connecting portion 98 may be configured by a connector or the like that can be attached to and detached from each other, and may be directly connected to each other without using the relay wiring member 100.

The elements with the driver-side connecting portion 96, the interface-side connecting portion 98, and the relay wiring member 100 as a unit are referred to as connection units 102A to 102C. The connection units 102A to 102C of the present embodiment include a first connection unit 102A corresponding to the input power supply line (the first wiring member 22A), a second connection unit 102B corresponding to the input communication line (the third wiring member 22C), and a third connection unit 102C corresponding to the output communication line (the fourth wiring member 22D).

The power input to the actuator 10A via the input power supply line (here, the first wiring member 22A) is supplied to each electric component of the actuator 10A via the interface substrate 92, the first connection unit 102A, and the driver substrate 90. Here, an example in which the electric component is only the control unit 94 is shown, but the present invention is not limited thereto, and the electric component may include a brake mechanism, a sensor, or the like. Further, the power output from the input power supply line (first wiring member 22A) to the output power supply line (here, the second wiring member 22B) passes through the above-described inter-terminal wiring 80 and does not pass through the first connection unit 102A and the driver substrate 90.

Further, the information input to the actuator 10A via the input communication line (here, the third wiring member 22C) is transmitted to the control unit 94 of the actuator 10A via the interface substrate 92, the second connection unit 102B, and the driver substrate 90. Further, the information input to the actuator 10A is output from the control unit 94 to the second actuator 10B via the driver substrate 90, the third connection unit 102C, and the interface substrate 92 and then via the output communication line (here, the fourth wiring member 22D).

The effects related to the above features will be described. In a case where the driver substrate 90 is incorporated in the actuator 10A, in general, the wiring member is connected to the driver-side connecting portion 96 of the driver substrate 90 in order to electrically connect the driver substrate 90 and the external device. In a case where an existing driver substrate 90 is used, the degree of freedom relating to the layout of the driver-side connecting portion 96 is low, in general. Therefore, in a case where the wiring member is connected to the existing driver substrate 90, the layout of the driver-side connecting portion 96 greatly restricts the degree of design freedom relating to the wiring path of the wiring member and the structure of the actuator 10A related thereto.

Therefore, the actuator 10A of the present embodiment includes an interface substrate 92 on which connection members 30A to 30D to which the wiring members 22A to 22D are connectable are mounted, in addition to the driver substrate 90. Therefore, the wiring members 22A to 22D are connected to the connection members 30A to 30D of the interface substrate 92, instead of the driver-side connecting portion 96 of the driver substrate 90, so that the driver substrate 90 and the external device are electrically connected to each other. Therefore, the layout (position, shape, size, and the like) of the connection members 30A to 30D to which the wiring members 22A to 22D are connected can be freely designed without being affected by the layout of the driver-side connecting portion 96. As a result, the degree of design freedom relating to the wiring paths of the wiring members 22A to 22D and the structure of the actuator 10A relating thereto is increased, and convenience can be improved. In particular, in a case where the existing driver substrate 90 is used, it is advantageous in that such an effect can be obtained.

The driver-side connecting portion 96 and the interface-side connecting portion 98 are connected to each other via the relay wiring member 100. Therefore, the degree of freedom of the position of the interface substrate 92 with respect to the driver substrate 90 increases, compared to a case where the driver-side connecting portion 96 and the interface-side connecting portion 98 are directly connected to each other. As a result, the degree of design freedom of the wiring path or the like of the wiring members 22A to 22D can be further increased.

### (Embodiment 2-1)

Next, an actuator 10A according to Embodiments 2-1 and 2-2 will be described. In the following embodiment, the above-described contents may be applied to the components that are not described below, among the components (for example, the interface substrate 92, and the like) described in the above-described embodiments. In Embodiments 2-1 and 2-2, with regard to the direction in which the first wiring 36A extends, an example different from that in Embodiment 1 will be described, but the same content as that in Embodiment 1 may be applied.

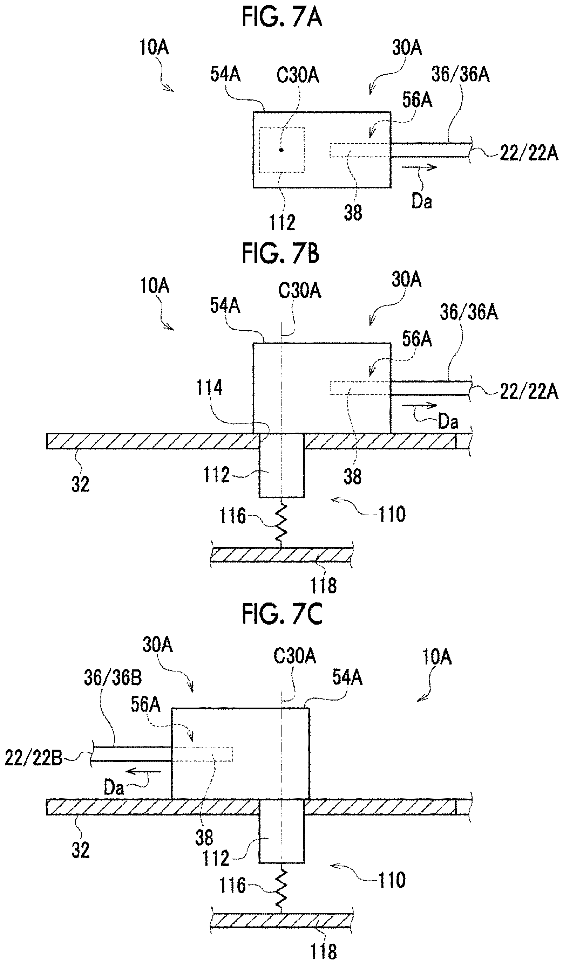

Figs. 7A to 7C will be referred to. The actuator 10A includes the first connection member 30A described above, and a changing mechanism 110 capable of changing the direction of the first connecting portion 56A of the first connection member 30A. The first connection member 30A includes the first base member 54A, the first connecting portion 56A (details are not shown), and the first terminal 58A (not shown), described above. Any one of the above-described first wiring member 22A and the second wiring member 22B are connectable to the first connection member 30A of the present embodiment. Hereinafter, there may be a case where the components (wirings 36A and 36B and connected portions 38A and 38B) related to these are collectively described without being distinguished. When these are collectively referred to, "first" and "second" at the beginning and "A" and "B" at the end, which have been described for the purpose of distinguishing these, are omitted. For example, when the first wiring member 22A and the second wiring member 22B are simply referred to as the wiring member 22 when collectively referred to.

The changing mechanism 110 can change the wiring extension direction Da of the wiring member 22 connected to the first connection member 30A by changing the direction of the first connecting portion 56A of the first connection member 30A. The wiring extension direction Da here refers to a direction in which the wiring 36 extends from the connected portion 38 of the wiring member 22. The direction of the first connecting portion 56A and the wiring extension direction Da coincide with each other. The changing mechanism 110 of the present embodiment fixes the first connection member 30A to the first fixed member 32 such that the direction of the entire first connection member 30A is changeable. In order to implement this, the changing mechanism 110 of the present embodiment fixes the first connection member 30A to the first fixed member 32 to be rotatable around a rotation center line C30A. In addition, the changing mechanism 110 may be incorporated in the first connection member 30A, and the direction of the first connecting portion 56A may be changed without changing the direction of a part of the first connection member 30A.

The changing mechanism 110 of the present embodiment includes a fitting protrusion 112 provided on one of the first connection member 30A and the first fixed member 32 (here, the first connection member 30A), a fitting recessed portion 114 which is provided on the other of the first connection member 30A and the first fixed member 32 (here, the fixed member 32) and into which the fitting protrusion 112 is fitted, and a biasing member 116 such as a spring that biases the first connection member 30A axially inward. The rotation center line C30A of the present embodiment passes through the fitting protrusion 112 and is parallel to the axial direction. Here, an example is shown in which the biasing member 116 connects the other member 118 provided integrally with the first fixed member 32 and the first connection member 30A. The biasing member 116 may bias the first connection member 30A axially inward, and the specific position and the fixing mode to the other member are not particularly limited.

The first connection member 30A can be pulled up from the first fixed member 32 against the biasing force of the biasing member 116 by applying an external force axially outward. In this way, the first connection member 30A is pulled up axially outward, and thus, the fitting between the fitting protrusion 112 and the fitting recessed portion 114 can be released. In addition, by rotating the first connection member 30A around the rotation center line C30A, the direction of the first connecting portion 56A of the first connection member 30A can be changed in the axial direction perpendicular surface. Thereafter, the external force applied to the first connection member 30A is released, so that the first connection member 30A is pulled axially inward by the biasing force of the biasing member 116, and the fitting protrusion 112 and the fitting recessed portion 114 are fitted to each other again. Accordingly, the state of being stationary in the direction of the first connecting portion 56A after the change is maintained.

The changing mechanism 110 of the present embodiment is capable of changing the direction of the first connecting portion 56A in the axial direction perpendicular surface. The changing mechanism 110 of the present embodiment is capable of changing the direction of the first connecting portion 56A to be any one of the radially inward state (refer to Fig. 7B) and the radially outward state (refer to Fig. 7C). When the direction of the first connecting portion 56A is changed between the radially inward state and the radially outward state, the changing mechanism 110 of the present embodiment rotates the first connection member 30A by 180 degrees around the rotation center line C30A.

The changing mechanism 110 of the present embodiment is configured to be capable of being fixed in the direction of the first connecting portion 56A changed by the changing mechanism 110, by restraining the rotation of the first connection member 30A around the rotation center line C30A. In order to implement this, in the present embodiment, the fitting protrusion 112 and the fitting recessed portion 114 are in a shape in which the fitting protrusion 112 is fitted into the fitting recessed portion 114 when the fitting protrusion 112 and the fitting recessed portion 114 are provided at the directions that the first connecting portion 56A can take, and thus the rotation of the first connection member 30A around the rotation center line C30R can be restrained. As a shape to be able to implement this, the fitting protrusion 112 and the fitting recessed portion 114 may be formed of, for example, a rectangular cross-section, a polygonal cross-section, an elliptical cross-section, or the like.

(B1) According to the above actuator 10A, the direction of the first connecting portion 56A of the first connection member 30A can be changed by the changing mechanism 110. Therefore, thus the space required for the wiring member 22 can be reduced, by changing the direction of the first connecting portion 56A such that the space required for the wiring member 22 connected to the first connection member 30A can be reduced as much as possible.

For example, in a case where the first wiring member 22A is connected to the first connection member 30A, the first connecting portion 56A is directed radially inward, so that compared to a case where the first connecting portion 56A is directed radially outward, the wiring path of the first wiring member 22A can be shortened, and a space required for the first wiring member 22A can be reduced. In this case, when the first connecting portion 56A is directed radially outward, it is necessary to additionally provide a folding portion that folds back from the outside in the radial direction to the inside in the radial direction toward the first connected portion 38A in the first wiring 36A, which lengthens the wiring path of the first wiring member 22A. In addition, in a case where the second wiring member 22B is connected to the first connection member 30A, the first connecting portion 56A is directed radially outward, so that compared to a case where the first connecting portion 56A is directed radially inward, the wiring path of the second wiring member 22B can be shortened more and the space required for the second wiring member 22B can be reduced. In this case, when the first connecting portion 56A is outward in the radial direction, it is necessary to additionally provide a folding portion that folds back from the inside in the radial direction to the outside in the radial direction toward the second connected portion 38B in the second wiring 36B, and the wiring path of the second wiring member 22B is lengthened by that amount.

A part of the first wiring 36A of the first wiring member 22A is provided to extend toward the first connection member 30A from a point deviated inward in the radial direction with respect to the first connection member 30A. Further, a part of the first wiring 36A is provided to extend toward the first connection member 30A from a point deviated outward in the radial direction with respect to the first connection member 30A.

An example in which the changing mechanism 110 herein is capable of changing the direction of the first connecting portion 56A in two steps in the radial inward direction and the radial outward direction is described. The changing mechanism 110 may change the direction of the first connecting portion 56A in two or more steps in the axial direction perpendicular surface or steplessly. In this case, the space required for the first wiring member 22A can be reduced as in the above-described (B1), by changing the direction of the first connecting portion 56A such that the wiring path of the first wiring member 22A from the portion drawn from the hollow portion 26 of the actuator 10A to the first connection member 30A is as straight as possible when viewed in the axial direction.

In addition, the changing mechanism 110 may be capable of changing the angle of direction (wiring extension direction Da) of the first connecting portion 56A with respect to the axial direction. Accordingly, as the angle of the direction of the first connecting portion 56A with respect to the axial direction approaches 90°, the space (axial space) required for the first wiring member 22A connected to the first connecting portion 56A can be reduced, as in the above-described (B1).

Therefore, the space required for the first wiring member 22A connected to the first connecting portion 56A can be reduced, by changing the direction of the first connecting portion 56A in the axial direction perpendicular surface or the angle of the direction of the first connecting portion 56A with respect to the axial direction by the changing mechanism 110.

(B2) The changing mechanism 110 is capable of changing the direction of the first connecting portion 56A in the axial direction perpendicular surface. Therefore, the direction of the first connecting portion 56A of the first connection member 30A can be changed to any one of the radially inward direction and the radially outward direction. Therefore, in a case where the first wiring member 22A is connected to the first connection member 30A, the first connecting portion 56A is directed radially inward, so that the wiring path can be shortened. Further, in a case where the second wiring member 22B is connected to the first connection member 30A, the first connecting portion 56A is directed radially outward, so that the wiring path can be shortened. As a result, even in a case where the first wiring member 22A or the second wiring member 22B is connected to the first connection member 30A, according to this connection, the wiring path can be shortened by changing the direction of the first connecting portion 56A.

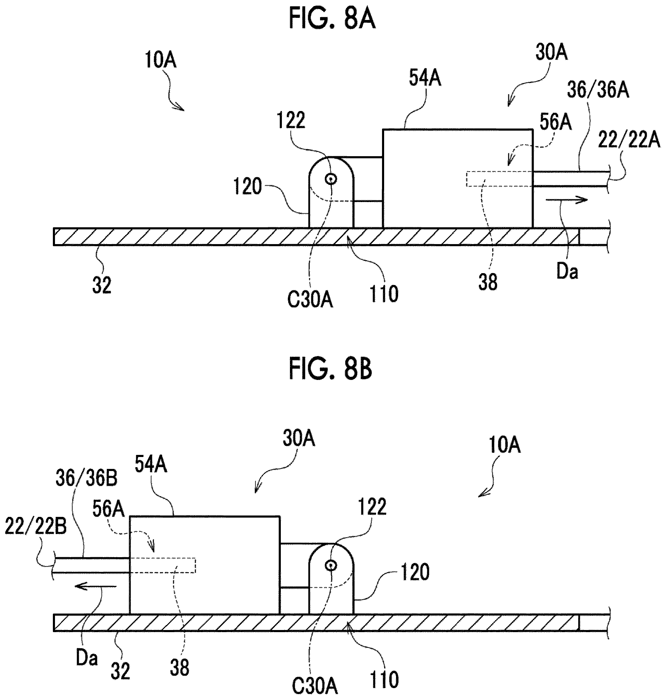

Embodiment 2-2 will be described. Figs. 8A and 8B will be referred to. Here, a modification example of the changing mechanism 110 described in Embodiment 2A will be described. The changing mechanism 110 of the present embodiment is a hinge mechanism. The changing mechanism 110 includes a hinge base 120 fixed to the first fixed member 32, and a hinge shaft 122 along which the first connection member 30A is attached to the hinge base 120 to be rotatable around a rotation center line C30A. The rotation center line C30A of the present embodiment is around one direction parallel to a plane perpendicular to the axial direction.

The changing mechanism 110 of the present embodiment is capable of changing the direction of the first connecting portion 56A in the axial direction perpendicular surface, as in Embodiment 2-1. The changing mechanism 110 of the present embodiment is capable of changing the direction of the first connecting portion 56A to be any one of the radially inward state (refer to Fig. 8A) and the radially outward state (refer to Fig. 8B) as in Embodiment 2-1. When the direction of the first connecting portion 56A is changed between the radially inward state and the radially outward state, the changing mechanism 110 of the present embodiment rotates the first connection member 30A by 180 degrees around the rotation center line C30A. In the present embodiment, the same effects as those of (B1) and (B2) described above can be obtained.

In addition, in any according to Embodiments 2-1 and 2-2, for example, the first terminal 58A of the first connection member 30A is electrically connected to the electric component via a conduction portion such as a conductor pattern of the interface substrate 92 that is the first fixed member 32. In any case, the first connection member 30A is configured to maintain conduction between the first terminal 58A (not shown) of the first wiring member 22A and the conduction portion, before and after the first connection member 30A rotates around the rotation center line C30A. In order to implement this, for example, points (for example, the fitting protrusion 112 and the hinge shaft 122) that rotate integrally with the first connection member 30A and points (for example, the fitting recessed portion 114 and the hinge base 120) that receive the rotation may be provided with a rotation connecting connector, and conduction between the first terminal 58A and the conduction portion may be maintained before and after the rotation.

Here, an example in which the changing mechanism 110 is applied to the first connection member 30A has been described. However, the same configuration may be applied to the second connection member 30B to the fourth connection member 30D.

Next, an actuator 10A according to Embodiments 3-1 to 3-5 will be described. In the following embodiment, the above-described contents may be applied to the components that are not described below, among the components (for example, the extending direction of the wiring, the interface substrate 92, the changing mechanism 110, and the like) described in each of the above-described embodiments.

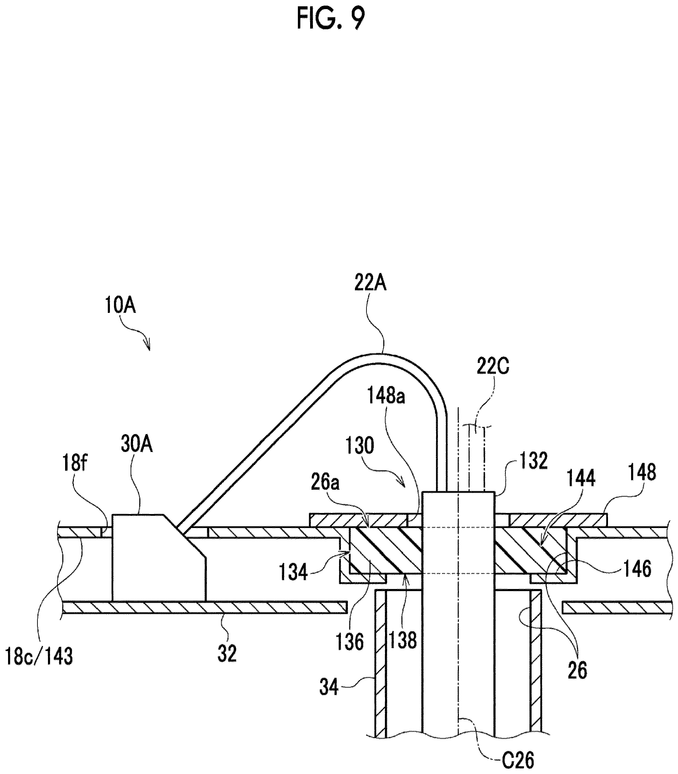

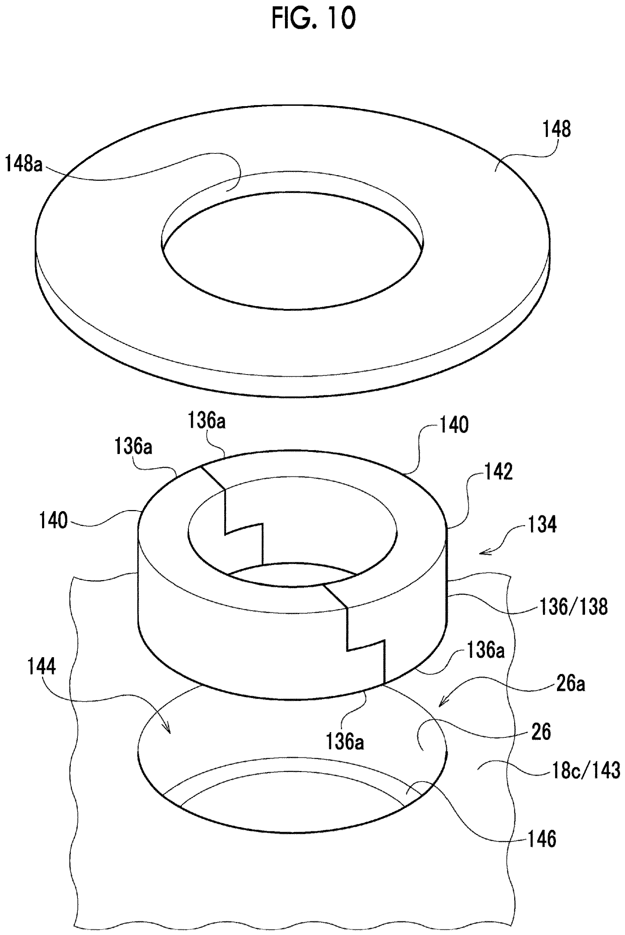

Figs. 9 and 10 will be referred to. Here, an example is shown in which a part of the hollow portion 26 of the actuator 10A is provided in the cover 18c in addition to the rotary shaft 34. The hollow portion 26 is formed inside the rotary shaft 34 and the cover 18c that are aligned in the axial direction.

The actuator 10A is used in combination with a wiring body 130 to be inserted into the hollow portion 26 of the actuator 10A. The wiring body 130 includes at least one of the wiring members 22A and 22C. The wiring body 130 of the present embodiment includes the first wiring member 22A and the third wiring member 22C, but the number of the wiring members is not particularly limited. In a case where the wiring body 130 includes a plurality of the wiring members 22A and 22C, the wiring body 130 may include a covering tube 132 that covers the plurality of the wiring members 22A and 22C as any configuration.

In general, the wiring body 130 to be inserted into the hollow portion 26 of the actuator 10A is not fixed to the actuator 10A at a point other than the connection members 30A and 30C. Therefore, when the relative positions of the external device and the actuator 10A are changed by the operation of the actuator 10A, the intermediate portion of the wiring body 130 largely moves, so that abnormal deformation such as twisting and bending occurs, and there is a risk of disconnection of the wiring members 22A and 22C.

Therefore, the actuator 10A according to Embodiments 3-1 to 3-5 includes a wire holding member 134 that holds the wiring body 130 inserted into the hollow portion 26 of the actuator 10A. Therefore, compared to the case where the wiring body 130 is not fixed to the actuator 10A at points other than the connection members 30A and 30C, a large movement of the intermediate portion of the wiring body 130 is reduced by the wire holding members 134, and abnormal deformation of the wiring body 130 can be reduced.

Here, a wiring path of the wiring body 130 that is continuous from the connection points with the connection members 30A and 30C to the fixing point to the actuator 10A or the like is referred to as a movable section of the wiring body 130. The movable section of the wiring body 130 that is continuous to the connection points with the connection members 30A and 30C is a section that can freely move with respect to the actuator 10A. The shorter the movable section of the wiring body 130 becomes, the more advantageous it is in reducing an increase in the load on the connection points with the connection members 30A and 30C when the movable section moves, and in avoiding the disconnection of the wiring members 22A and 22C from the connection members 30A and 30C. By using the wire holding member 134 according to the present embodiment, the movable section of the wiring body 130 that is continuous to the connection points with the connection members 30A and 30C can be shortened, as compared to the case where the wiring body 130 is fixed to another member outside the actuator 10A. Therefore, the present embodiment is advantageous in that an increase in the load on the connection points with the connection members 30A and 30C can be reduced.

Further, the wire holding member 134 according to Embodiments 5-1 to 5-5 holds the wiring body 130 at the end portion or in the vicinity of the end portion of the hollow portion 26 of the actuator 10A. Therefore, it is advantageous in that the movable section of the wiring body 130 that is continuous to the connection points with the connection members 30A and 30C can be shortened, as compared to a case where the wiring body 130 is fixed to the actuator 10A at a point far away from the other end portion of the hollow portion 26 of the actuator 10A toward the external device side. In particular, from such a viewpoint, it is preferable that the wire holding member 134 can hold the wiring body 130 at the one end portion 26a or in the vicinity of the one end portion 26a of the hollow portion 26 of the actuator 10A.

Hereinafter, detailed features of the wire holding member 134 according to Embodiments 3-1 to 3-5 will be described. First, the features of the wire holding member 134 according to Embodiment 3-1 will be described. The wire holding member 134 includes a holding portion 136 that holds the intermediate portion of the wiring body 130 by gripping the intermediate portion of the wiring body 130. The intermediate portion of the wiring body 130 refers to a portion between both end portions of the connection members 30A and 30C or the wiring members 22A and 22C connected to the external device (a portion other than both end portions of the wiring members 22A and 22C). The holding portion 136 of the present embodiment is disposed to surround the center line C26 of the hollow portion 26 of the actuator 10A. The center line C26 here includes not only the center line present inside the hollow portion 26 but also an extension line obtained by extending the line outside the hollow portion 26 along the axial direction.

The holding portion 136 of the present embodiment is configured by a tubular member 138. The tubular member 138 of the present embodiment is configured by a pair of division portions 140 that divide the tubular member 138 in the circumferential direction. The holding portion 136 of the present embodiment is configured by an elastic body 142 at least in a part, and holds the wiring body 130 by using a restoring force caused by elastic deformation of the elastic body 142. The holding portion 136 of the present embodiment is entirely formed of the elastic body 142. The elastic body 142 is formed of, for example, rubber or the like.

The holding portion 136 of the present embodiment includes a pair of facing end portions 136a facing in the circumferential direction. In the present embodiment, the circumferential end portions on both sides in the circumferential direction of each of the pair of division portions 140 configure facing end portions 136a, and two sets of the pair of the facing end portions 136a are provided. The pair of facing end portions 136a of the present embodiment are provided such that some parts of the facing end portions 136a overlap when viewed in the axial direction. In order to implement this, the end surface in the circumferential direction of each of the pair of facing end portions 136a of the present embodiment is formed in a step shape in which the position in the circumferential direction is gradually changed toward the axial direction on the same side in the circumferential direction. In addition, in order to implement this, as in Embodiment 3-4 described later, the end surface in the circumferential direction of each of the pair of facing end portions 136a may be formed to diagonally extend toward the same side in the circumferential direction in the axial direction. Accordingly, when the distance between the pair of facing end portions 136a is narrowed and the wiring body 130 is pinched between the pair of facing end portions 136a, the distance is less likely to be narrowed, and it is easy to identify that the wiring body 130 is pinched between the pair of facing end portions 136a.

The wire holding member 134 is fixed to the second fixed member 143 which is a part of the actuator 10A. The second fixed member 143 of the present embodiment is the cover 18c that configures one end portion 26a of the hollow portion 26. The second fixed member 143 is provided with an accommodation portion 144 that accommodates the wire holding member 134 at one end portion 26a of the hollow portion 26. The accommodation portion 144 is provided as a recessed portion that is recessed axially inward on the outer surface portion of the second fixed member 143. The accommodation portion 144 is provided with a step portion 146 for positioning the wire holding member 134 in the axial direction. The holding portion 136 of the wire holding member 134 is fitted into the accommodation portion 144. At this time, the holding portion 136 (elastic body 142) is fitted into the accommodation portion 144 with the elastic deformation of the holding portion 136 itself, and is fixed to the second fixed member 143 by the restoring force due to the elastic deformation, and holds the wiring body 130. Accordingly, the wiring body 130 can be firmly gripped by only fitting the wire holding member 134 into the hollow portion 26.

The actuator 10A of the present embodiment includes a pressing member 148 that presses the wire holding member 134 from the outside in the axial direction. The pressing member 148 prevents the wire holding member 134 from falling off axially outward from the inside of the accommodation portion 144. The pressing member 148 is fixed to the second fixed member 143 by a fixture such as a screw. The pressing member 148 is provided with a through-hole 148a penetrating in the axial direction for inserting the wiring body 130. In a case where the pressing member 148 is used, a seat portion that is recessed axially inward may be provided in the outer surface portion of the second fixed member 143, and the pressing member 148 may be accommodated in the seat portion. Accordingly, it is possible to make the pressing member 148 not largely protrude axially outward from the outer surface portion of the second fixed member 143.

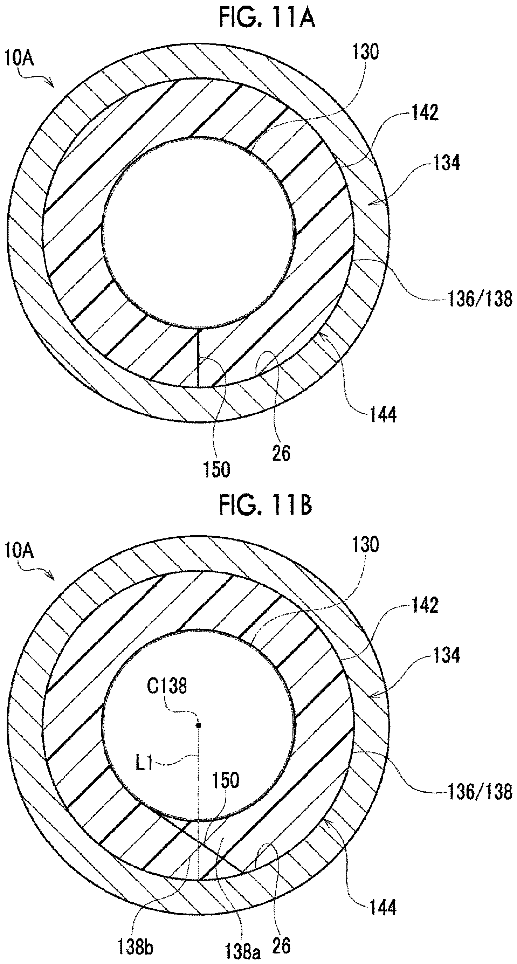

A wire holding member 134 according to Embodiment 3-2 will be described with reference to Fig. 11A. The holding portion 136 of the present embodiment is also configured by the tubular member 138, as in Embodiment 3-1. The holding portion 136 of the present embodiment is configured by a single portion in which the cutout 150 that divides the tubular member 138 in the circumferential direction is formed. In this way, the holding portion 136 is configured by a single portion in which the pair of division portions 140 or the pair of cutouts 150 are formed, so that the wiring body 130 is easily disposed inside the holding portion 136.

A wire holding member 134 according to Embodiment 3-3 will be described with reference to Fig. 11B. The holding portion 136 of the present embodiment is also configured by the tubular member 138, as in Embodiment 3-1. The tubular member 138 is configured by a single portion in which the cutout 150 is formed, as in Embodiment 3-2. The cutout 150 of the present embodiment extends obliquely to one side in the circumferential direction (here, counterclockwise) toward the outside in the radial direction, with respect to the radius line L1 extending from the center line of the tubular member 138. Accordingly, in a state where an other circumferential portion 138b is overlapped on the outer side of a one circumferential portion 138a of the tubular member 138 in the radial direction, the tubular member 138 can be fitted into the hollow portion 26. By adjusting the circumferential length of the point in which both circumferential portions 138a and 138b of the tubular member 138 are overlapped with each other in the radial direction, the size of the gripping point for gripping the wiring body 130 in the holding portion 136 can be adjusted according to the size of the wiring body 130.

The wire holding member 134 according to Embodiments 3-1 to 3-3 described above is fixed to one end portion 26a of the hollow portion 26 of the actuator 10A. In order to implement this, the wire holding member 134 of the embodiments is fitted with its own elastic deformation into the accommodation portion 144 provided in one end portion 26a. In order to implement this, the pressing member 148 as in Embodiment 3-1 may be used in Embodiments 3-2 and 3-3.

As in Embodiments 3-1 to 3-3, in a case where the accommodation portion 144 is provided in the hollow portion 26, a tapered portion that is reduced in diameter axially inward may be provided on either the inner peripheral surface of the accommodation portion 144 or the outer peripheral surface of the wire holding member 134 (the outer peripheral surface of the holding portion 136). Accordingly, the degree of collapse of the elastic body 142 can be increased as it goes axially inward, and the holding force of the wiring body 130 by the wire holding member 134 is increased.

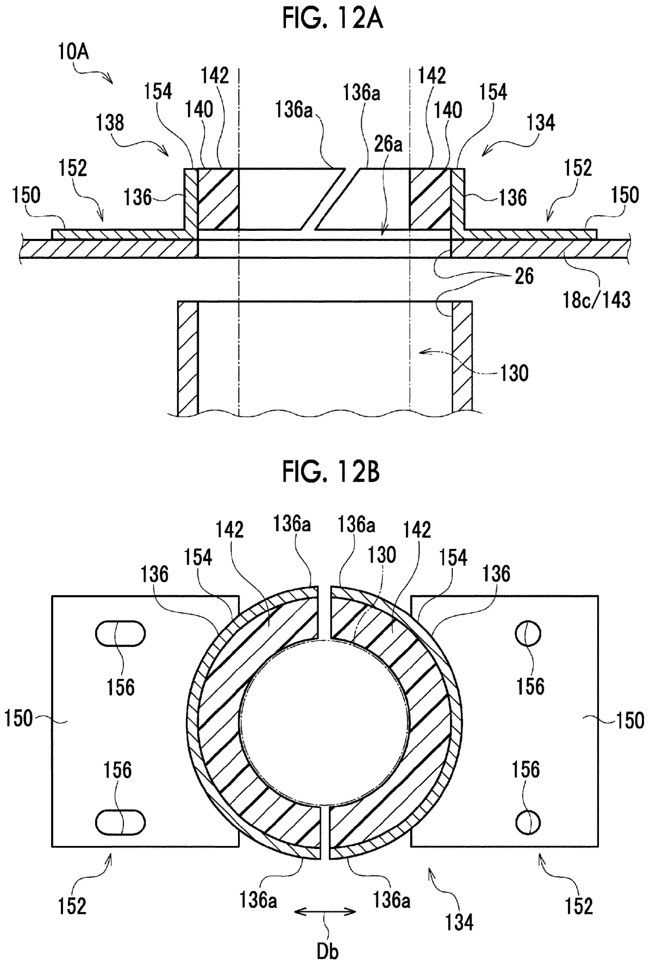

A wire holding member 134 according to Embodiment 3-4 will be described with reference to Figs. 12A and 12B. The wire holding member 134 according to Embodiment 3-4 includes a plate-shaped fixation portion 150 fixed to the second fixed member 143, and a holding portion 136 that stands up axially outward from the fixation portion 150. The wire holding member 134 of the present embodiment is configured by a pair of division components 152. Each of the pair of division components 152 includes the above-described division portions 140 that configure the holding portion 136 in addition to the individual fixation portion 150.

The holding portion 136 of the present embodiment is configured by the tubular member 138, as in Embodiment 3-1. The tubular member 138 is configured by a pair of division portions 140, as in Embodiment 3-1. The holding portion 136 of the present embodiment includes an elastic body 142 that configures a contact point with the wiring body 130, and a base body 154 to which the elastic body 142 is fixed by adhesion or the like. The base body 154 is formed of a hard material (for example, metal, resin, or the like) harder than the elastic body 142.

As described above, the wire holding member 134 includes the holding portion 136 that stands up from the fixation portion 150. Therefore, the wiring body 130 drawn out from the one end portion 26a of the hollow portion 26 of the actuator 10A can be held by the holding portion 136 at the vicinity of the one end portion 26a of the hollow portion 26 and on the axial extension of the one end portion 26a. Here, the "vicinity" refers to a point where, for example, an end portion near the hollow portion 26 among the drawn parts of the wiring body 130 drawn from the hollow portion 26 of the actuator 10A closer to the hollow portion 26 can be held.

The fixation portion 150 of the division components 152 according to Embodiment 3-4 is fixed to the second fixed member 143 by a fixture such as a screw. A through-hole 156 for inserting the shaft portion of the fixture is formed in the fixation portion 150. The through-hole 156 of one of the pair of division components 152 is an elongated hole that extends along the facing direction Db in which the pair of division components 152 face each other. Accordingly, the distance between the pair of division components 152 in the facing direction Db can be adjusted, and the size of the gripping point for gripping the wiring body 130 in the holding portion 136 can be adjusted in accordance with the size of the wiring body 130.

The pair of facing end portions 136a in the holding portion 136 are provided to partially overlap each other when viewed in the axial direction. In order to implement this, the end surface in the circumferential direction of each of the pair of facing end portions 136a of the present embodiment is formed to obliquely extend toward the same side in the circumferential direction toward the axial direction. In addition, the facing end portions 136a may be formed in a step shape as in Embodiment 3-1. Accordingly, as Embodiment 3-1, it is easy to identify when the wiring body 130 is pinched between the pair of facing end portions 136a. Further, as in the present embodiment, in a case where the holding portion 136 of the wire holding member 134 is not fitted into the hollow portion 26, the wiring body 130 in the holding portion 136 is hardly pulled out from between the pair of facing end portions 136a.

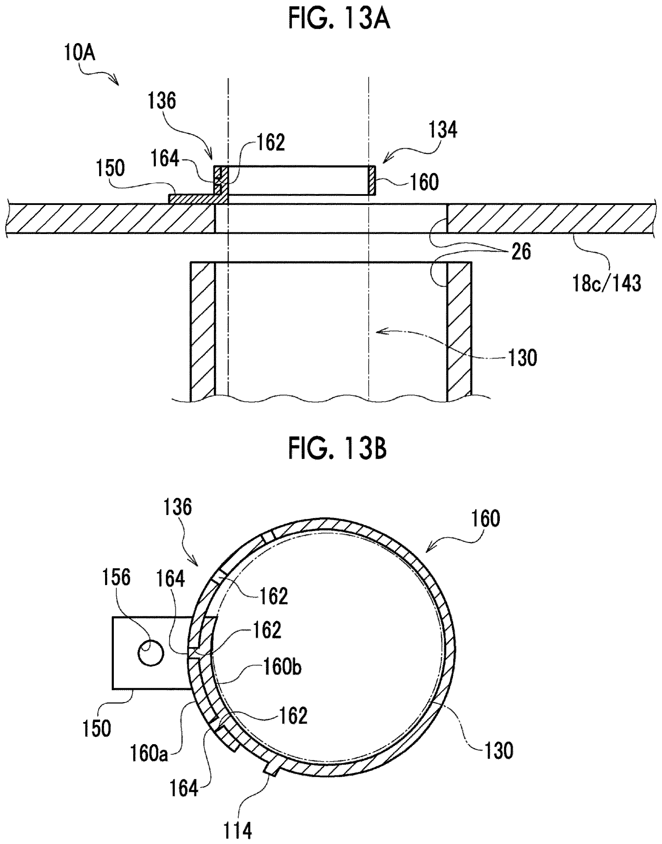

A wire holding member 134 according to Embodiment 3-5 will be described with reference to Figs. 13A and 13B. The wire holding member 134 of the present embodiment includes the fixation portion 150 and the holding portion 136, as in Embodiment 3-4. The wire holding member 134 of the present embodiment is configured by a single component instead of the division components 152 as in Embodiment 3-4. The holding portion 136 of the present embodiment is configured by a band member 160 instead of the above-described tubular member 138. It is possible to provide a gripping portion for gripping the wiring body 130 by the band member 160 coupling a one circumferential portion 160a and an other circumferential portion 160b in the circumferential direction. The band member 160 is capable of changing the coupling point of the one circumferential portion 160a to be coupled with the other circumferential portion 160b in the circumferential direction, and thus, the circumferential length of the gripping point is adjustable. Specific examples for implementing this are not particularly limited, and the band member 160 may be configured by a binding band, or a plurality of first coupling portions 162 and second coupling portions 164 to be described later may be used.

The band member 160 of the present embodiment includes a plurality of first coupling portions 162 provided in the one circumferential portion 160a of the band member 160 at an interval in the circumferential direction, and a plurality of second coupling portions 164 provided in the other circumferential portion 160b of the band member 160 at an interval in the circumferential direction. One of the first coupling portion 162 and the second coupling portion 164 is a protrusion, and the other is a recessed portion that can be coupled by fitting the protrusion. By changing a first coupling portion 162 to be coupled with the second coupling portion 164 among the plurality of first coupling portions 162, it is possible to change the coupling point of the one circumferential portion 160a to be coupled with the other circumferential portion 160b in the circumferential direction.

Next, modification examples of each component described so far will be described.

The respective wiring members 22A to 22D may connect the actuator 10A with the external device, and the specific use thereof is not particularly limited. As an example, an example in which the first and second wiring members 22A and 22B configure a power supply line has been described, but in addition to this, the first and second wiring members 22A and 22B may configure a communication line or the like. Further, in the embodiment, a case where the first wiring member 22A is the input power supply line and the second wiring member 22B is the output power supply line has been described, but the reverse may be possible. In addition, the wiring member configuring the power supply line may include a wiring member configuring an auxiliary power supply line, in addition to the first and second wiring members 22A and 22B configuring the main power supply line. For example, the auxiliary power supply line is used to supply auxiliary power to an encoder or the like mounted on the actuator 10A from an auxiliary power supply device. In this case, as a connection unit that connects the driver substrate 90 and the interface substrate 92, a connection unit that corresponds to the main power supply line and the auxiliary power supply line may be included.

An example in which the connected portions 38A and 38B according to Embodiment 1 are configured by the wirings 36A and 36B has been described. Alternatively, the connected portion 38A may be configured by an end portion member provided at one end portion of the wirings 36A and 36B and connected to the connection members 30A and 30B. For example, the end portion member is configured by a terminal such as a crimp terminal or a pressure contact terminal in addition to the connector. In this case, in relation to the effect of (A), the connection members 30A and 30B may be connected to the wiring members 22A and 22B such that the wirings 36A and 36B extend obliquely and radially inward from the end portion members to be the connected portions 38A and 38B. In addition, the connection members 30A and 30B may be configured by a connector, in addition to a terminal block such as a screwless type terminal block and a screw type terminal block.

In a relationship with the effects of (B1) and (B2), the first connection member 30A may be connectable to the first wiring member 22A such that the first wiring 36A extends along the axial direction from the first connected portion 38A of the first wiring member 22A.

The actuator 10A may not include the second wiring member 22B and the second connection member 30B. The second connection member 30B may be connectable to the second wiring member 22B such that the second wiring 36B extends along the axial direction from the second connected portion 38B of the second wiring member 22B. The first terminal 58A of the first connection member 30A and the second terminal 58B of the second connection member 30B may not be electrically connected to each other with the same polarity.

The actuator 10A may be provided without the interface substrate 92, and the wiring members 22A to 22D may be connected to the driver-side connecting portion 96 of the driver substrate 90. The driver-side connecting portion 96 and the interface-side connecting portion 98 may be directly connected to each other.

The wire holding member 134 may be capable of holding the wiring body 130, and specific examples thereof are not limited to the contents of the embodiment. The wire holding member 134 may hold the wiring body 130 at the other end portion or in the vicinity of the other end portion of the hollow portion 26, in addition to the one end portion 26a of the hollow portion 26 of the actuator 10A.

The above embodiments and modification examples are examples. The technical ideas that abstract the embodiments and modification examples should not be construed as limited to the contents of the embodiments and modification examples. With respect to the contents of the embodiments and modification examples, many design changes such as the change, addition, and deletion of components can be made. In the above-described embodiments, the contents for which such a design change is possible are emphasized by adding the notation "embodiment". However, design changes are allowed even when there is no such notation in the contents. The hatching attached to the cross-section in the drawing does not limit the material of the object to which the hatching is attached.

Any combination of the above components is also valid. For example, any description of other embodiments may be combined with the embodiment, or the modification examples may be combined with any description of the embodiments and modification examples. In the embodiment, the component composed of a single member may be composed of a plurality of members. Similarly, a component composed of a plurality of members in the embodiment may be composed of a single member.

### Brief Description of the Reference Symbols

- 10A:: actuator
- 22A:: first wiring member
- 22B:: second wiring member
- 26:: hollow portion
- 26a:: one end portion
- 30A:: first connection member
- 30B:: second connection member
- 36A:: first wiring
- 36B:: second wiring
- 38A:: first connected portion
- 38B:: second connected portion
- 56A:: first connecting portion
- 58A:: first terminal
- 58B:: second terminal
- 90:: driver substrate
- 92:: interface substrate
- 96:: driver-side connecting portion
- 98:: interface-side connecting portion
- 100:: relay wiring member
- 110:: changing mechanism
- 130:: wiring body
- 134:: wire holding member

## Claims

1. An actuator (10A) comprising:
a hollow portion (26); and
a first connection member (30A) to which a first wiring member (22A) to be inserted into the hollow portion (26) is connectable, wherein
the first wiring member (22A) includes a first wiring (36A) to be inserted into the hollow portion (26), and a first connected portion (38A) that is provided at one end portion (26a) of the first wiring (36A) and is connectable to the first connection member (30A), and
the first connection member (30A) is connectable to the first wiring member (22A) such that the first wiring (36A) extends from the first connected portion (38A) obliquely with respect to an axial direction and inward in a radial direction.

2. The actuator (10A) according to claim 1, further comprising:
a second connection member (30B) to which a second wiring member (22B) is connected, wherein
the second wiring member (22B) includes a second wiring (36B), and a second connected portion (38B) that is provided at an end portion of the second wiring (36B) and connected to the second connection member (30B), and the second connection member (30B) is connectable to the second wiring member (22B) such that the second wiring (36B) extends from the second connected portion (38B) obliquely with respect to the axial direction and outward in the radial direction.

3. The actuator (10A) according to claim 2, wherein
the first connection member (30A) includes a pair of first terminals (58A) having different polarities,
the second connection member (30B) includes a pair of second terminals (58B) having different polarities, and each of the first terminals (58A) of the pair is electrically connected to a second terminal (58B) having the same polarity out of the pair of the second terminals (58B) .

4. An actuator (10A) comprising:
a hollow portion (26);
a first connection member (30A) having a first connecting portion (56A) to which a first wiring member (22A) to be inserted into the hollow portion (26) is connectable; and
a changing mechanism (110) capable of changing a direction of the first connecting portion (56A).

5. The actuator (10A) according to claim 4, wherein
the changing mechanism (110) is capable of changing the direction of the first connecting portion (56A) in a plane perpendicular to an axial direction of the hollow portion (26).

6. The actuator (10A) according to claim 1 or 4, further comprising:
a driver substrate (90) having a driver-side connecting portion (96); and
an interface substrate (92) on which a connection member, to which a wiring member is connectable, is mounted, wherein
the interface substrate (92) has an interface-side connecting portion (98) connected to the driver-side connecting portion (96).

7. The actuator (10A) according to claim 6, wherein
the driver-side connecting portion (96) and the interface-side connecting portion (98) are connected to each other via a relay wiring member (100).

8. The actuator (10A) according to claim 1 or 4, further comprising:
a wire holding member (134) that holds a wiring body (130) including the first wiring member (22A) at an end portion of the hollow portion (26) or in a vicinity of the end portion.

9. The actuator (10A) according to claim 8, wherein
the wire holding member (134) is fitted into the end portion of the hollow portion (26) to hold the wiring body (130) .
